Europäisches Patentamt

(19) European Patent Office

Office européen des brevets

(11) Numéro de publication: **0 162 184**

**A1**

(12) # DEMANDE DE BREVET EUROPEEN

(21) Numéro de dépôt: **84870065.4**

(22) Date de dépôt: **23.05.84**

(51) Int. Cl.⁴: **G 02 C 11/00**

(43) Date de publication de la demande:
**27.11.85 Bulletin 85/48**

(84) Etats contractants désignés:
**AT BE CH DE FR GB IT LI LU NL SE**

(71) Demandeur: **Tarkanyi, Alexandre**
**490 Avenue Louise**
**B-1050 Bruxelles(BE)**

(72) Inventeur: **Tarkanyi, Alexandre**
**490 Avenue Louise**
**B-1050 Bruxelles(BE)**

(74) Mandataire: **Claeys, Pierre et al,**
**Bureau Gevers 7, rue de Livourne Bte I**
**B-1050 Bruxelles(BE)**

(54) **Lunettes pourvues d'au moins un transducteur électroacoustique.**

(57) Lunettes, comprenant une monture de support (1) des verres et des branches articulées (2,3) sur la monture, au moins l'une de ces branches supportant un transducteur électroacoustique (5,6) qui permet de produire une puissance accoustique en fonction de signaux électriques et qui est électriquement connecté à un générateur de signaux électriques, caractérisées en ce qu'elles comprennent, à titre de générateur de signaux électriques, un récepteur d'ondes électro-magnétiques (7) incorporé au moins partiellement dans la monture (1) et/ou les branches (2,3) des lunettes et en ce que les connexions électriques entre le générateur de signaux électriques et le ou les transducteurs électro-accoustiques (5,6) sont totalement masquées par la monture (1) et les branches (2,3) des lunettes.

FIG. 1

EP 0 162 184 A1

"Lunettes pourvues d'au moins un transducteur électroacoustique"

La présente invention est relative à des lunettes, comprenant une monture de support des verres et
des branches articulées sur la monture, au moins l'une
de ces branches supportant un transducteur électroacoustique qui permet de produire une puissance acoustique
en fonction de signaux électriques et qui est électriquement connecté à un générateur de signaux électriques.

On connaît des lunettes de ce genre sous la
forme de prothèses auditives incorporées au moins partiellement dans l'extrémité des branches des lunettes.
Ces prothèses comporte généralement un microphone, un
amplificateur et un écouteur ou éventuellement un vibrateur pour conduction osseuse, ainsi que deux commandes, l'une pour l'amplitude du signal de sortie, c'est-
à-dire le volume, et l'autre pour le réglage de la
tonalité (v. Grand Larousse encyclopédique, Tome I, Libraire Larousse,1960,p.720).Ces appareils permettent
uniquement une meilleure audition d'ondes acoustiques,
pour les malentendants.

On connaît également des écouteurs à appliquer
sur les oreilles ou à accrocher à l'une de celles-ci, ces
écouteurs étant reliés par des fils conducteurs non
dissimulables par exemple à une radio portative ou à
un lecteur de cassettes (v. Asian Sources Electronic
Components, Hong Kong, Janvier 1984, p. 23). Un tel

**0162184**

dispositif est peu pratique à transporter, en particulier sur la plage en tenue de bain, et en toutes circonstances, il est peu esthétique à cause des fils qui pendent d'une oreille. Beaucoup des écouteurs mis sur le marché sont à introduire dans l'oreille ou à appliquer sur l'orifice de celle-ci ce qui peut être très dangereux en cas de chute malencontreuse de l'utilisateur. Dans certains pays, de tels écouteurs sont d'ailleurs interdits, notamment pour les motocyclistes.

On connaît aussi des casques d'écoute dont l'un des écouteurs comprend en outre un récepteur de radio, ces écouteurs recouvrant généralement largement les oreilles de l'utilisateur et étant réunis par un support élastique en forme de U renversé qui applique les écouteurs contre les oreilles. En plus du fait que, comme le dispositif précédent, ces casques sont peu esthétiques et très voyants, ils présentent le large inconvénient d'isoler totalement l'utilisateur de son environnement, ce qui peut présenter de grands dangers en maintes occasions, en particulier dans la circulation en ville.

On connaît enfin des appareils radios à transistors miniaturisés, d'une telle dimension qu'ils sont capables par exemple d'être incorporés dans une montre bracelet. C'est ce que l'on appelle des montres radio. Celles-ci sont également prévues pour être reliées par des fils conducteurs à des écouteurs tels que décrits ci-dessus. (v. Asian Sources Electronic Components, Hong Kong, Janvier 1984, p. 46,47). Il faut enfin remarquer que plus les dispositifs sont miniaturisés, plus leur commande par un bouton ou autre élément de commande devient malaisé.

3    0162184

La présente invention a pour but de mettre au point un dispositif d'écoute de radio permettant d'écouter seul une émission radio sans gêner son entourage, ce dispositif devant éviter les inconvénients précités et être autant que possible imperceptible pour les personnes entourant l'utilisateur, ou en tout cas uniquement d'une manière non inesthétique. Ce dispositif doit aussi être d'un emploi très pratique pour l'utilisateur non seulement par l'absence de fils pendants et d'appareils secondaires à transporter, mais aussi par une facilité d'utilisation des commandes. Enfin, ce dispositif doit pouvoir présenter le maximum de garanties de sécurité pour l'utilisateur, en cas de chutes, et ne pas l'isoler totalement de son environnement.

On résout ces problèmes suivant l'invention par des lunettes, telles que décrites ci-dessus, et caractérisées en ce qu'elles comprennent, à titre de générateur de signaux électriques , un récepteur d'ondes électromagnétiques incorporé au moins partiellement dans la monture et/ou les branches des lunettes et en ce que les connexions électriques entre le générateur de signaux électriques et le ou les transducteurs électroacoustiques sont totalement masquées par la monture et les branches des lunettes.

Suivant une forme de réalisation de l'invention, le récepteur d'ondes-électromagnétiques est incorporé dans la monture, dans la partie servant de pont entre les deux lunettes, ainsi qu'éventuellement dans les parties servant à enchâsser les verres. En variante, le récepteur d'ondes électromagnétiques peut être incorporé dans une des branches.

0162184

Suivant une forme de réalisation avantageuse de l'invention, les connexions électriques susdites sont des conducteurs électriques totalement incorporés dans la matière de la monture et des branches des lunettes et, aux articulations de chacune des branches sur la monture, les conducteurs incorporés dans la monture sont en contact avec les conducteurs correspondants des branches, en position écartée de celles-ci, et hors de contact avec ces conducteurs, en position repliée des branches.

Suivant une forme de réalisation préférée de l'invention, l'une des connexions électriques précitées est celle reliant la source de courant au circuit intégré récepteur du récepteur d'ondes électro-magnétiques, la branche correspondante servant simultanément d'élément de commande de l'interrupteur de courant formé par l'articulation correspondante.

D'autres détails et particularités de l'invention ressortiront de la description donnée ci-après à titre non limitatif et avec référence aux dessins annexés.

La figure 1 représente une vue en perspective d'une paire de lunettes suivant l'invention. Les branches gauche et droite de ces lunettes illustrant deux formes de réalisation différentes.

La figure 2 représente une vue frontale de l'articulation d'une des branches, dans la position repliée des branches.

La figure 3 représente un schéma bloc d'un circuit électrique susceptible d'être utilisé dans les lunettes représentées sur la figure 1.

Sur les dessins, les éléments identiques ou analogues sont désignés par les mêmes références.

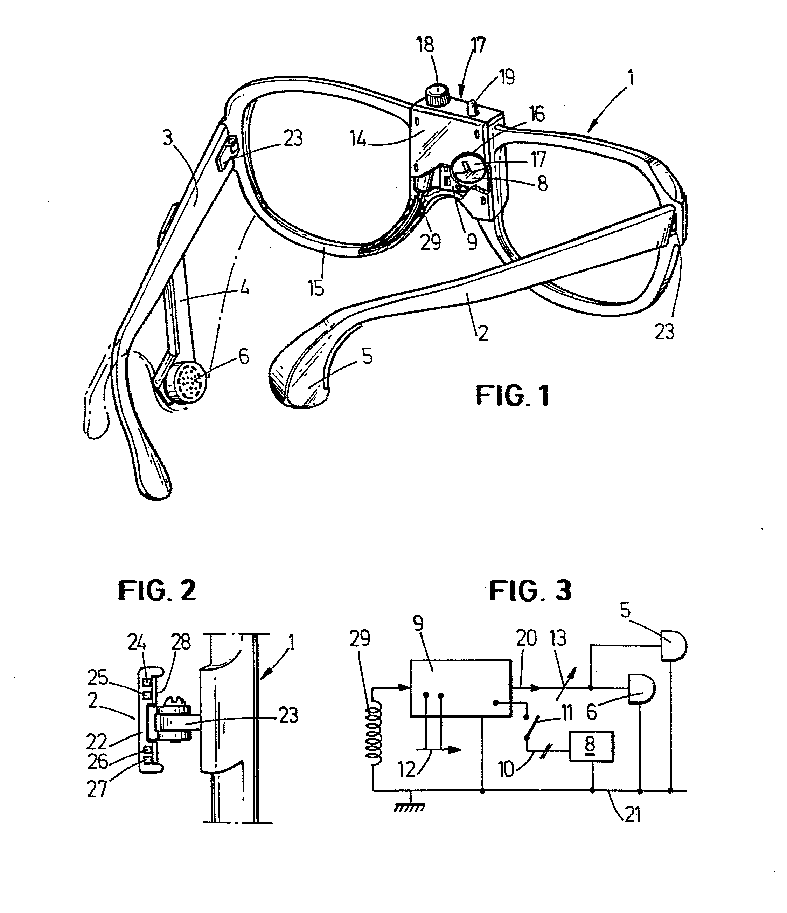

Les lunettes illustrées sur la figure 1 comprennent une monture de support 1 des verres et des branches 2 et 3 articulées sur la monture par des charnières 23. La branche gauche 2 supporte un transducteur électroacoustique sous la forme d'un écouteur intégré 5 dans l'extrémité libre de cette branche, cet écouteur étant ainsi appliqué contre la tête, derrière l'oreille, comme c'est déjà le cas pour les lunettes de certains malentendants. Par le terme d'"écouteur", il faut entendre également les vibrateurs pour conduction osseuse. La branche droite 3 supporte un transducteur électroacoustique sous la forme d'un écouteur 6 supporté par une branche secondaire 4 suspendue à la branche 3 de manière à appliquer l'écouteur 6, non pas sur l'orifice auditif , mais juste en avant de ce dernier. Il est évident que le support de ces écouteurs avant 6 ou arrière 5 peut être prévu différemment. On peut notamment envisager, dans un but d'esthétique, une branche 3 très large, comme représentée en traits mixtes sur la figure 1, et une fixation de l'écouteur 6 directement sur la branche 3.

Les lunettes suivant l'invention comprennent en outre, à titre de générateur de signaux électriques, un récepteur d'ondes électro-magnétiques 7 incorporé au moins partiellement dans la monture 1 et/ou les branches 2 ou respectivement 3 des lunettes. Ce récepteur, qui peut être un récepteur de radio, dont le schéma bloc est illustré sur la figure 3, peut comprendre une source de courant 8 reliée à un circuit intégré récepteur 9 par une connexion électrique 10 pourvue d'un interrupteur de courant 11 .Le circuit intégré récepteur est également connecté du côté entrée à une antenne réceptrice 8 et du côté sortie à deux écouteurs 5 et 6 montés en parallèle. Le circuit peut être accordé sur une fréquence unique prédéterminée. On peut toutefois prévoir également un réglage d'accord 12 pour pouvoir écouter plusieurs postes d'émission différents au choix, ainsi qu'éventuellement un réglage de volume 13 des signaux électriques basse fréquence produits par le circuit récepteur 9. Ce réglage de volume 13 peut être situé dans le circuit intégré récepteur 9 ou entre ce circuit et les écouteurs 5 et 6. L'interrupteur et chacun de ces réglages doivent être commandés par un élément de commande facilement accessible à la main de l'utilisateur sur la monture et/ou les branches, et aussi peu visible que possible.

Sur la figure 1, le récepteur 7 est incorporé pour sa plus grande part dans la monture 1, dans la partie servant de pont 14 entre les deux lunettes. L'antenne est, dans la forme de réalisation représentée, prolongée dans la partie inférieure gauche 15 de la monture, qui sert à l'enchâssement du verre gauche (cette partie a été représentée partiellement brisée). La source de courant 8 est une pile remplaçable, encastrée dans un logement 16 prévu à cet effet dans la partie servant de pont 14 (Cette partie a aussi été partiellement brisée à cet endroit pour faciliter la lecture de la figure). Un couvercle amovible 17 ferme ce logement du côté interne de la monture.

Sur la figure 1 on a représenté uniquement un bouton poussoir 18 pour commander l'interrupteur de courant 11 et un bouton à molette 19 pour commander le réglage d'accord 12. On n'a pas représenté d'élément de commande pour un réglage de volume. De tels boutons et éléments de commande sont connus en soi et leur mode d'action n'a donc pas besoin d'être expliqué de manière plus détaillée.

Il doit être entendu que le récepteur 7 peut être agencé différemment de la manière illustrée, sans sortir pour cela du cadre de l'invention. On peut prévoir par exemple d'agencer l'antenne dans une des parties supérieures de la monture et le circuit intégré dans l'autre avec la seule pile dans la partie centrale. On pourrait imaginer d'incorporer le récepteur dans une branche latérale large, la monture servant uniquement à permettre le passage de connexions électriques entre le récepteur et l'écouteur agencé sur la branche opposée, si celle-ci est pourvue d'un écouteur.

On peut même envisager un récepteur incorporé dans une branche et relié à un seul écouteur prévu sur cette même branche.

Enfin, les éléments de commande peuvent être disposés en d'autres endroits, par exemple aux coins supérieurs gauche et droit de la monture ou sur une branche, dans le cas où le récepteur 7 est incorporé dans une branche.

Des connexions électriques 20, 21 sont prévues entre le circuit récepteur 9 et les écouteurs 5 et 6 et des connexions 10 sont prévues entre la pile 8 et le circuit récepteur 9. Elles ne sont pas représentées sur la figure 1 parce qu'elles sont totalement intégrées dans la monture et les branches.

Sur la figure 2 est représentée une forme de réalisation particulièrement avantageuse de connexions électriques à prévoir dans des lunettes suivant l'invention. Dans cette figure,qui est une vue frontale de la branche 2 en position repliée sur la monture 1, on observe le coin gauche supérieur de la monture 1, brisé, et l'extrémité avant de la branche avec sa surface d'appui 22, qui,en position écartée de la branche 2, est en appui contre une surface correspondante de la monture 1, non visible sur cette figure. La charnière 23 sert d'articulation et permet le pivotement de la branche 2 entre sa position repliée, représentée, et sa position écartée.

Sur cette surface d'appui 22, on peut voir quatre extrémités 24,25,26 et 27 de conducteurs électriques sous une forme directement imprimée sur la face interne des branches, et revêtue ensuite d'un revêtement isolant 28, éventuellement opaque. Des conducteurs correspondants sont imprimés et isolés sur la face interne de la monture, de manière que, en position écartée de la branche 2,ces conducteurs correspondants viennent chacun en contact avec un des conducteurs 24,25,26 et 27. On peut d'ailleurs prévoir que les conducteurs 24 et 25 et leurs correspondants sur la monture forment les connexions électriques 20 et 21 entre récepteur et écouteur et que les conducteurs 26 et 27 et leurs correspondants sur la monture forment les connexions 10 entre la pile 8 et le circuit récepteur 9. Dans ce cas, l'élément de commande de l'interrupteur de courant 11 devient la branche 2 elle-même, ce qui supprime un des boutons miniatures difficilement manipulables et difficiles à masquer des lunettes suivant l'invention. De plus, le procédé de fabrication des lunettes illustrées sur la figure devient très simple car on peut envisager d'imprimer directement sur la monture et/ou les branches non seulement les connexions électriques mais aussi le circuit intégré récepteur 9.

On peut évidemment prévoir de simplement masquer les connexions électriques par les branches et la monture en fixant ces connexions par exemple par collage sur la face interne des branches et de la monture. On peut aussi prévoir des branches et une monture creuses ou profilées en U et des fils conducteurs introduits dans leur cavité. Les fils peuvent être continus entre les branches et la monture, car par leur souplesse ils sont capables de se plier, en même temps que les branches. On peut aussi prévoir de noyer des fils conducteurs et les composants du récepteur et de l'écouteur dans la matière formant les branches et la monture.

Il doit être entendu que la présente invention n'est en aucune façon limitée aux formes de réalisation décrites ci-dessus et que bien des modifications peuvent y être apportées sans sortir du cadre du présent brevet.

On peut par exemple prévoir aussi, en plus de l'interrupteur formé entre la pile et le circuit récepteur par une des branches des lunettes, comme décrit précédemment, un interrupteur à bouton qui permette de faire cesser l'écoute tout en conservant les lunettes sur la tête. La branche servant d'interrupteur conservant son utilité de sécurité de coupure du courant dans le cas où les lunettes sont rangées et inutilisées.

REVENDICATIONS

1. Lunettes, comprenant une monture de support (1) des verres et des branches articulées (2,3) sur la monture, au moins l'une de ces branches supportant un transducteur électroacoustique (5,6) qui permet de produire une puissance acoustique en fonction de signaux électriques et qui est électriquement connecté à un générateur de signaux électriques, caractérisées en ce qu'elles comprennent, à titre de générateur de signaux électriques, un récepteur d'ondes électro-magnétiques (7) incorporé au moins partiellement dans la monture (1) et/ou les branches (2,3) des lunettes et en ce que les connexions électriques entre le générateur de signaux électriques et le ou les transducteurs électroacoustiques (5,6) sont totalement masquées par la monture (1) et les branches (2,3) des lunettes.

2. Lunettes suivant la revendication 1, caractérisées en ce que le récepteur d'ondes électromagnétiques (7) comprend, incorporés dans la monture (1) et/ou l'une des branches (2,3), une source de courant (8), une antenne réceptrice (29), et un circuit intégré récepteur (9) qui est connecté à la source de courant (8) et à l'antenne et qui transmet des signaux basse fréquence au ou aux transducteurs électroacoustiques (5,6), ainsi qu'au moins un interrupteur (11), prévu entre la source de courant (8) et le circuit intégré récepteur (9), et un réglage d'accord (12) de ce dernier, l'interrupteur (9) et le réglage d'accord (12) étant chacun commandés par un élément de commande (2,18;19) accessible à la main sur la monture et/ou les branches.

3. Lunettes suivant l'une ou l'autre des revendications 1 et 2, caractérisées en ce que le récepteur d'ondes électromagnétiques (7) est incorporé dans la monture (1), dans la partie servant de pont (14) entre les deux lunettes, ainsi qu'éventuellement dans les parties servant à enchâsser les verres.

4. Lunettes suivant la revendication 3, caractérisées en ce que l'antenne (29) et/ou le circuit intégré (9) sont partiellement incorporés dans une ou plusieurs des parties inférieure et/ou supérieure de la monture, qui servent à enchâsser les verres.

5. Lunettes suivant l'une ou l'autre des revendications 1 et 2, caractérisées en ce que le récepteur d'ondes électromagnétiques (7) est incorporé dans une des branches (2,3).

6. Lunettes suivant l'une quelconque des revendications 1 à 5, caractérisées en ce que la source de courant est une pile (8) remplaçable, encastrée dans un logement (16) prévu à cet effet dans la monture ou une des branches, ce logement étant fermé par un couvercle amovible (17) du côté interne de la monture ou de la branche.

7. Lunettes suivant l'une quelconque des revendications 1 à 6, caractérisées en ce que le ou les transducteurs électroacoustiques sont des écouteurs (5) qui sont chacun intégrés dans l'extrémité des branches, de manière à être appliqués contre la peau derrière les oreilles.

8. Lunettes suivant l'une quelconque des revendications 1 à 6, caractérisées en ce que le ou les transducteurs électroacoustiques sont des écouteurs (6) supportés chacun par les branches devant les oreilles, éventuellement par une branche secondaire (4), de manière a être appliqués contre la peau en avant de l'orifice auriculaire.

9. Lunettes suivant l'une quelconque des revendications 1 à 8, caractérisées en ce que les connexions
électriques (10,20,21) susdites sont des conducteurs
électriques (24,25,26,27) totalement incorporés dans la
matière de la monture et des branches des lunettes et en
ce que, aux articulations de chacune des branches sur la
monture, les conducteurs incorporés dans la monture sont
en contact avec les conducteurs correspondants (24,25,
26,27) des branches, en position écartée de celles-ci,
et hors de contact avec ces conducteurs, en position
repliée des branches.

10. Lunettes suivant la revendication 9, caractérisées en ce que l'une des connexions électriques précitées est celle (10) reliant la source de courant (8) au
circuit intégré récepteur (9) du récepteur d'ondes électro-magnétiques (7), la branche correspondante (2) servant simultanément d'élément de commande de l'interrupteur
de courant (11) formé par l'articulation correspondante.

11. Lunettes suivant l'une ou l'autre des revendications 9 et 10, caractérisées en ce que les connexions électriques (10,20,21) et/ou le circuit imprimé
récepteur (9) du récepteur d'ondes électro-magnétiques
(7) sont directement imprimés sur la monture (1) et les
branches (2,3) et isolés électriquement de l'extérieur
par une couche de recouvrement (28).

12. Lunettes suivant l'une quelconque des revendications 1 à 12, caractérisées en ce qu'elles comprennent, dans ou à la sortie du circuit intégré (9) du récepteur d'ondes électro-magnétiques (7), un amplificateur de volume pourvu d'un élément de commande
accessible à la main.

0162184

**FIG. 1**

**FIG. 2**

**FIG. 3**

**0162184**
Numéro de la demande

Office européen
des brevets

**RAPPORT DE RECHERCHE EUROPEENNE**

EP 84 87 0065

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| | | | G 02 C 11/00 |
| X | DE-A-2 625 655 (A.H. ZIELINSKI) * Page 5, lignes 12-24; figure 1; revendications 1-3,5 * | 1,5-8 | |
| Y | | 2 | |
| | --- | | |
| X | DE-B-1 113 482 (G. RODENSTOCK) * Page 1, colonne 1, lignes 6-10, 23-30 * | 1,3-6, 8 | |
| Y | | 2 | |
| | --- | | |
| A | US-A-2 613 282 (A.M. SCAIFE) * En entier * | 1-4,6, 7,9,10 ,12 | |
| | | | DOMAINES TECHNIQUES RECHERCHES (Int. Cl.4) |
| | --- | | G 02 C |
| X | GB-A-1 201 461 (ATLAS ELECTRONICS) * En entier * | 1 | H 04 R |
| A | | 2-6,9 11 | |
| | --- | | |
| A | US-A-3 125 646 (F.W. LEWIS) * En entier * | 1,2,5 8 | |
| | ----- | | |

| | | |
|---|---|---|
| Le présent rapport de recherche a été établi pour toutes les revendications | | |
| Lieu de la recherche LA HAYE | Date d'achèvement de la recherche 09-01-1985 | Examinateur SEIFERT H.U. |